## Europäisches Patentamt
## European Patent Office
## Office européen des brevets

(19)

(11) Numéro de publication: **0 055 647**
**B1**

(12) **FASCICULE DE BREVET EUROPEEN**

(45) Date de publication du fascicule du brevet:
**14.08.85**

(51) Int. Cl.⁴: **G 21 C 17/00**

(21) Numéro de dépôt: **81401937.8**

(22) Date de dépôt: **04.12.81**

(54) Machine pour le contrôle sur leur poste de stockage des équipements internes d'un réacteur nucléaire.

(30) Priorité: **05.12.80 FR 8025865**

(43) Date de publication de la demande:
**07.07.82 Bulletin 82/27**

(45) Mention de la délivrance du brevet:
**14.08.85 Bulletin 85/33**

(84) Etats contractants désignés:
**BE CH DE FR IT LI SE**

(56) Documents cités:
**EP - A - 0 094 853**
**DE - A - 2 434 467**
**DE - A - 2 712 060**
**DE - A - 2 726 547**
**DE - A - 2 913 742**
**DE - B - 2 835 082**
**FR - A - 2 110 381**

**KERNENERGIE, volume 23, no. 3, mars 1980 BERLIN (DE) A. STURM "Instandhaltung kerntechnischer Ausrüstungen von Kernkraftwerken mit Druckwasserreaktoren", pages 73-77**

(73) Titulaire: **Framatome, Tour Fiat 1 place de la Coupole, F-92400 Courbevoie (FR)**

(72) Inventeur: **Launay, Jean-Pierre, 3 avenue Paul Cézanne, F-78160 Marly Le Roi (FR)**
Inventeur: **Castrec, Yves Marie, 76 rue Sadi Carnot, F-92000 Nanterre (FR)**

(74) Mandataire: **Lavoix, Jean et al, c/o Cabinet Lavoix 2, Place D'Estienne D'Orves, F-75441 Paris Cedex 09 (FR)**

## Description

La présente invention concerne une machine pour le contrôle des équipements internes d'un réacteur nucléaire, lorsque ceux-ci sont stockés dans la piscine du réacteur. Elle s'applique plus particulièrement au contrôle par ultra-sons de la plaque supérieure du cœur.

Dans la cuve d'un réacteur nucléaire à eau sous pression les assemblages combustibles sont surmontés par un ensemble d'équipements internes, souvent appelés «équipements internes supérieurs», et qui comportent une plaque support supérieure et une plaque inférieure reliées par des colonnes entretoises. On trouve également, entre les deux plaques, des tubes guides des grappes de contrôle qui sont suspendus à la plaque support supérieure et qui reposent sur la plaque inférieure sur laquelle ils sont maintenus par des broches élastiques. La plaque inférieure, qui constitue aussi la plaque supérieure du cœur proprement dit, comporte en saillie sur sa face inférieure des broches de centrage qui viennent s'engager dans des parties correspondantes de l'extrémité supérieure des assemblages combustibles pour assurer leur maintien en position.

Pendant les périodes de rechargement du réacteur, il est nécessaire d'enlever les équipements internes supérieurs pour avoir accès au combustible. Ces équipements sont raido-activement contaminés, et doivent être stockés sous eau dans la piscine pendant les opérations de rechargement ou de permutation du combustible. Il est prévu pour cela un stand support constitué par une bride circulaire qui repose sur le fond de la piscine par quatre pieds. Pour permettre de disposer d'une hauteur d'eau suffisante au-dessus de la plaque supérieure, et assurer la protection radiologique sans pour cela accroître exagérément le volume de la piscine, le stand support est situé dans une partie plus profonde de la piscine, formant une fosse de surface relativement faible. La plaque support supérieure des équipements internes supérieurs vient reposer en position de stockage sur la bride circulaire de ce stand, et la plaque inférieure vient alors à très petite distance du food de la fosse plus profonde de la piscine.

Il est particulièrement utile de profiter du temps d'arrêt du réacteur pour rechargement, pour contrôler en même temps les équipements internes supérieurs en position de stockage sur le stand, et en particulier contrôler l'état de la face inférieure de la plaque inférieure pour vérifier l'état de la plaque proprement dite, des pions de centrage des assemblages, ou des broches élastiques des tubes guides des grappes de contrôle. Mais ces opérations de contrôle sont difficiles en raison en particulier de la faible place disponible entre la plaque inférieure et le fond de la fosse de la piscine, et en raison en outre de l'exiguïté de cette fosse de plus forte profondeur. Enfin, pour ne pas allonger la durée des opérations de rechargement, et donc l'arrêt du réacteur, il est nécessaire de ne pas avoir à utiliser trop longtemps pour des opérations auxiliaires la machine de rechargement prévue pour se déplacer au-dessus de la piscine.

On connait, par la publication DE-A 2 712 060, une machine d'examen externe des enceintes de réacteurs nucléaires destinée à permettre de présenter des outils de contrôle en des emplacements prédéterminés. Une telle machine comporte une combinaison de chariots et de poutres avec des moyens de mise en mouvements relatifs de ces éléments perpendiculairement les uns aux autres de façon que l'élément porte-outil puisse couvrir toute la surface à inspecter. Mais une telle machine, même au prix d'adaptations simples pour un homme du métier, ne pourrait pas convenir dans les conditions particulières de travail dans l'espace restreint entre le fond de la piscine et la plaque inférieure des équipements internes, ni pour présenter les outils de contrôle systématiquement en des emplacements selon un pas régulier dans deux directions perpendiculaires.

La présente invention permet la réalisation d'une machine autonome, adaptée au travail sous la plaque inférieure, et qui n'entraîne pas nécessairement l'usage de la machine de chargement.

L'invention concerne une machine pour le contrôle des équipements internes d'un réacteur nucléaire, lorsque ceux-ci sont stockés dans la piscine du réacteur, en utilisant des appareils de contrôle qui doivent être présentés en des emplacements prédéterminés selon un maillage régulier sous la plaque inférieure de l'ensemble des équipements, cette machine comportant:

– un premier chariot longitudinal, monté sur des rails reposant au fond de la piscine et disposés sous le support de stockage des équipements internes avec des moyens de mise en déplacement par pas fixes et d'immobilisation sur les rails,
– une poutre transversale portée par le premier chariot, et mobile sur celui-ci selon une direction perpendiculaire à celle du déplacement du chariot,
– un deuxième chariot transversal équipé des appareils de contrôle, porté par la poutre et mobile sur celle-ci dans la même direction que celle du déplacement de la poutre sur le premier chariot,
– des moyens de mise en déplacement par pas fixes de la poutre sur le premier chariot,
– des moyens pour engendrer un mouvement du deuxième chariot sur la poutre à partir du mouvement de la poutre sur le premier chariot.

Selon l'invention, les moyens pour engendrer un mouvement du deuxième chariot sur la poutre à partir du mouvement de la poutre sur le premier chariot comportent une chaîne formant une boucle par fixation de chacune de ses extrémités sur chacune des extrémités du deuxième chariot, après renvoi sur deux roues solidaires des extrémités de la poutre, le brin de la boucle opposé au deuxième chariot étant rendu solidaire d'un point fixe lié au châssis du premier chariot.

Selon une forme préférentielle de réalisation de l'invention les déplacements, du premier chariot sur les rails, de la poutre transversale sur le premier chariot et du deuxième chariot sur la poutre, sont tous les trois réalisés pratiquement dans le même plan horizontal.

L'invention sera mieux comprise en se référant à un mode de réalisation particulier donné à titre d'exemple et représenté par les dessins annexés.

Les figures 1 et 2 sont des vues d'ensemble qui illustrent la mise en place de la machine de contrôle dans la piscine du réacteur. La figure 1 est une coupe de la piscine selon I-I de la figure 2 pendant la mise en place de la machine; la figure 2 est une vue de dessus après l'opération de mise en place.

La figure 3 représente la machine sur des rails supports, prête à fonctionner.

La figure 4 reproduit partiellement la figure 3, et montre plus particulièrement l'alimentation des différents organes hydrauliques, et les possibilités de déplacement du chariot porte-outils.

La figure 5 est une coupe transversale de la machine selon V-V de la figure 3.

La figure 6 est une vue de dessus du vérin de déplacement de la poutre.

La figure 7 est une coupe selon VII-VII de la figure 6.

La figure 8 est une vue de détail d'un galet moteur de déplacement, selon VIII-VIII de la figure 3.

La figure 9 est une coupe selon IX-IX de la figure 3.

Les figures 10 et 11 représentent, respectivement en élévation latérale avec coupe partielle et en vue de dessus, le chariot prote-outils proprement dit, isolé du reste de la machine.

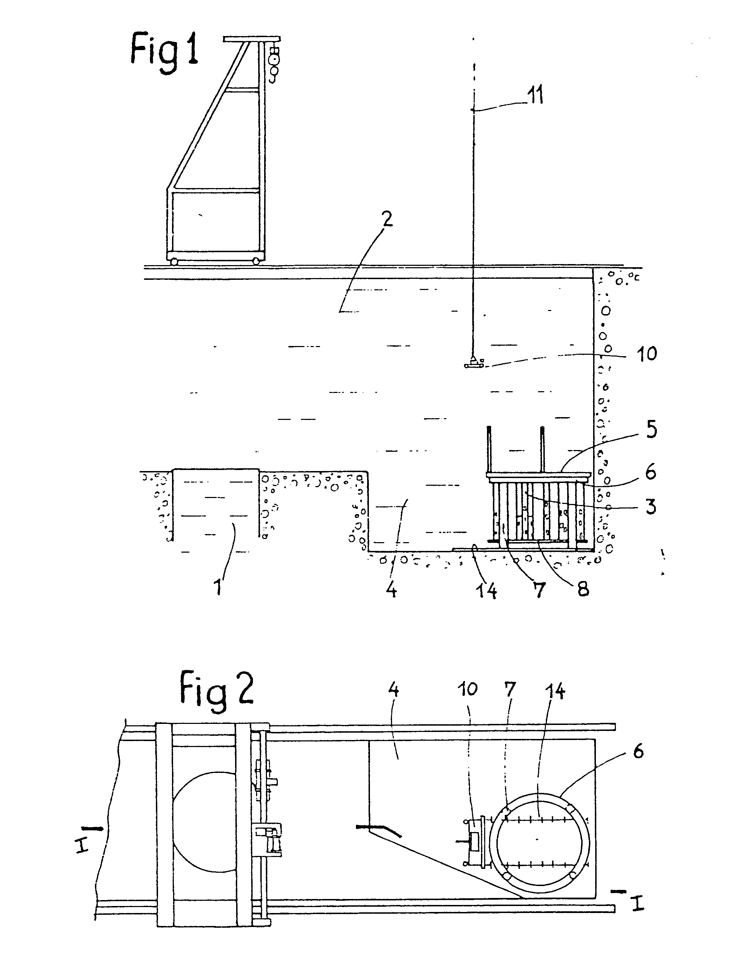

En se référant tout d'abord aux figures 1 et 2, on reconnaîtra la cuve 1 d'un réacteur nucléaire, couvercle enlevé pour une opération de chargement ou déchargement, et affleurant au fond de la piscine de protection 2. Les équipements internes supérieurs 3 de la cuve ont été extraits de celle-ci, et sont stockés dans une partie plus profonde 4 de la piscine 2. La fosse 4 est de section sensiblement trapèzoïdale. Les équipements internes reposent, par leur plaque supérieurs 5, sur la bride circulaire 6 du stand support, qui repose elle-même sur le fond de la fosse 4 par les quatre pieds 7. Pour clarifier la figure 2, on a supposé sur celle-ci que les équipements internes ont été enlevés du stand 6–7. On voit sur ces figures le peu de place disponible entre le fond de la piscine et la plaque inférieure 8 des équipements, et la difficulté d'y amener et d'y positionner des outils de contrôle comme par exemple des traducteurs à ultrasons.

La machine selon l'invention est ici visible en 10, selon un tracé très simplifié. Sur la figure 1 la machine 10, en cours d'amenée au poste de travail, est suspendue au câble 11 d'un treuil porté par le pont polaire du bâtiment, ou tout autre moyen de levage. Sur la figure 2 la machine 10 est en position sur ses rails 14 au fond de la piscine.

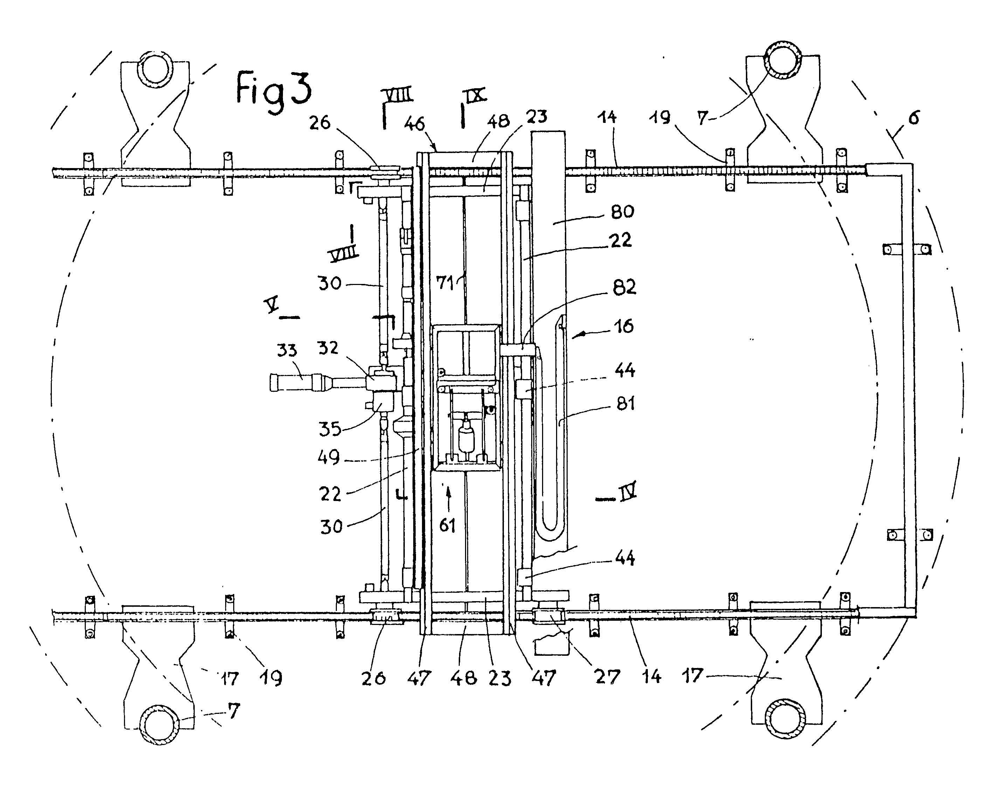

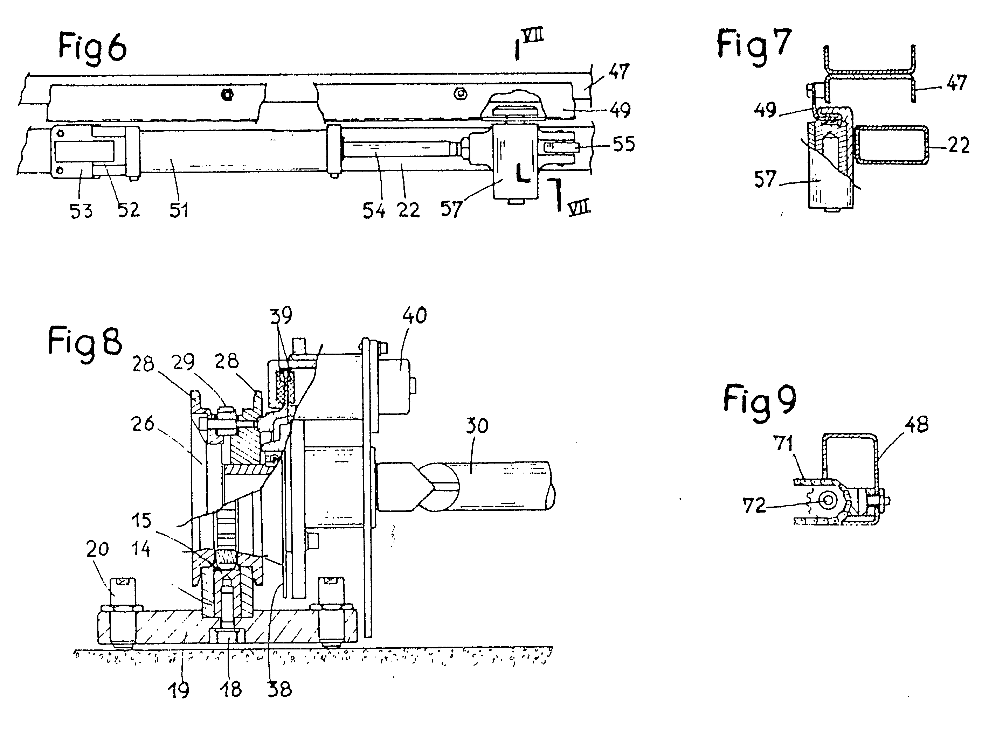

On se référera maintenant plus spécialement aux figures 3, 4 et 5, qui montrent à plus grande échelle la structure de la machine de contrôle 10. Celle-ci est constituée par un premier chariot, désigné globalement par 16, mobile en translation sur les rails 14 eux-mêmes positionnés par rapport aux pieds 7 du stand au moyen de cales entretoises 17. Les rails 14, mieux visibles sur la figure 8, comportent une partie centrale à crémaillère 15 entourée de deux parties lisses. Les rails 14 sont solidarisés par des vis 18 sur des patins d'appui 19, eux-mêmes mis à niveau par rapport au fond de la piscine par des vis vérins réglables 20.

Le chariot 16 est constitué par deux poutres caissons 22, entretoisées aux extrémités par des traverses 23 et dans la partie centrale par des nervures telles que 24. Le chariot 16 repose sur les rails 14 par deux galets moteurs 26 et deux galets porteurs 27. Les galets moteurs 26, comme on le voit mieux sur le détail de la figure 8, comportent deux roues à boudins 28 enserrant une roue dentée 29 en prise avec la crémaillère centrale 15 des rails 14. Les deux galets moteurs 26 sont entraînés simultanément, par l'intermédiaire de cardans 30, à partir d'un bloc moteur central 32 porté par le châssis du chariot 16. Le bloc 32 est un ensemble pignon-crémaillère entraîné par un vérin hydraulique à double effet 33.

La course du vérin 33, dans un sens comme dans l'autre, est déterminée en fonction des dimensions du système pignon-crémaillère, et en fonction du diamètre primitif de la roue dentée des galets 26, de telle sorte qu'une course complète du vérin corresponde à un déplacement du chariot 16 sur les rails 14 égal au pas des broches élastiques des guides de grappes sur la plaque inférieure 8. Le système moteur comporte également un embrayage 35, commandé par un vérin hydraulique 36, permettant l'entrainement positif des cardans 30 par le système pignon-crémaillère 32, ou au contraire une course neutre de retour du vérin 33 sans entraîner le chariot. On verra encore (figure 8) que chaque galet moteur 26 est muni d'un frein à disque constitué par un disque 38 qui passe entre les mâchoires fixes et mobiles 39 d'un vérin hydraulique frein 40.

Les galets porteurs 27, sans roue dentée, ne prennent appui que sur les flasques lisses des rails.

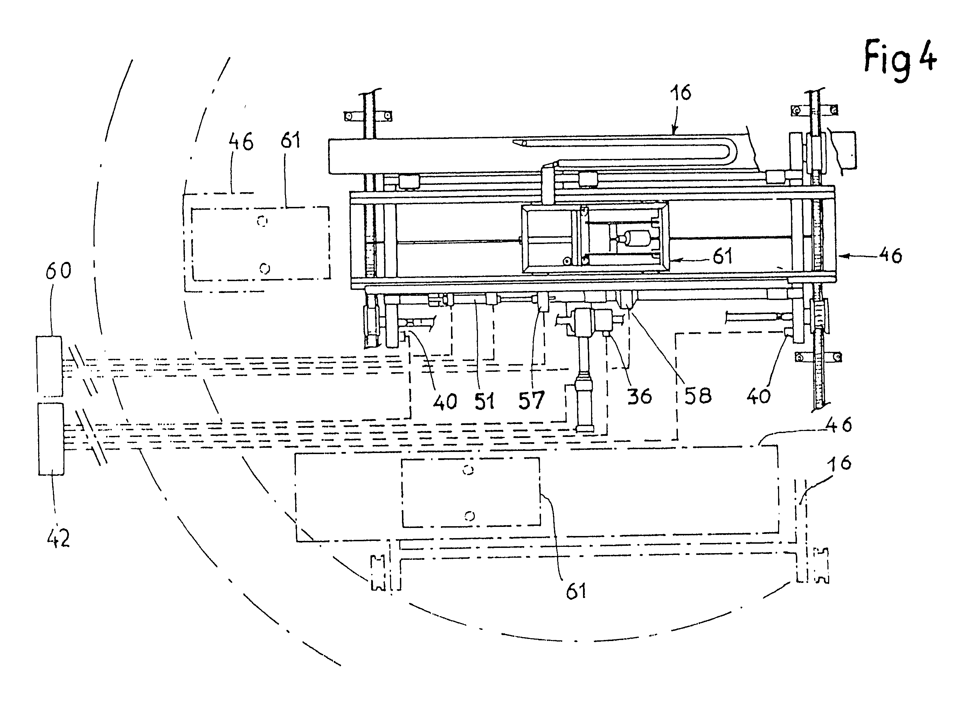

L'alimentation hydraulique des deux entrées du vérin moteur 33, de l'embrayage sélectif 35 et des deux freins 40 est représentés schématiquement sur la figure 4, et est sous la dépendance d'un bloc distributeur 42; selon le sens désiré de déplacement du chariot 16, le vérin 36 de l'embrayage 35 est mis en action en même temps que l'alimentation de l'une ou l'autre des entrées du vérin 33, et par ailleurs les galets 26 sont immobilisés par l'action des vérins freins 40 dès que l'on commande le débrayage par le vérin 36.

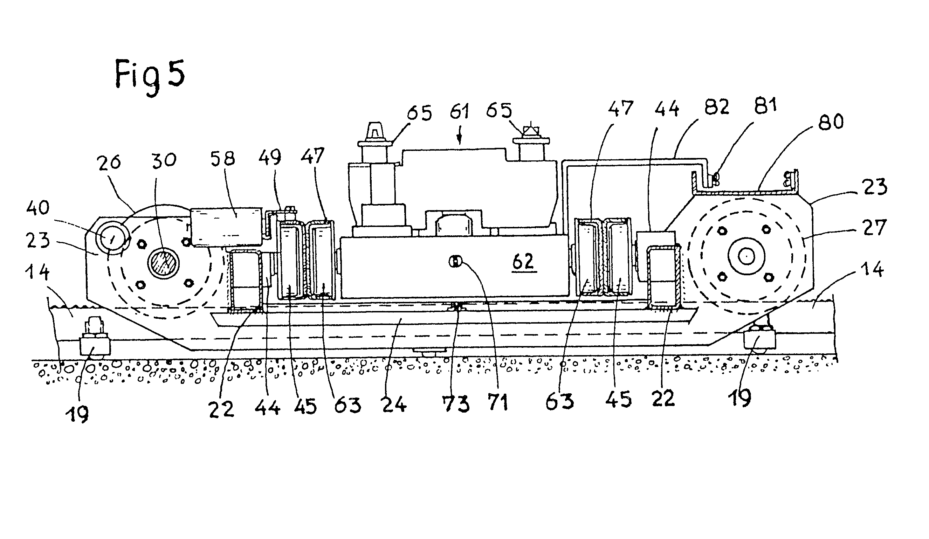

En revenant plus particulièrement sur les figures 3 et 5, on verra que sur chaque membrure 22 du chariot 16 sont soudés trois paliers supports 44 pour des galets fous 45 en port-à-faux vers l'intérieur du chariot. Les galets 45 servent de chemins de roulement à une poutre transversale désignée globalement par 46, et constituée par deux membrures en I 47 entretoisées à chaque extrémité par une traverse 48. L'une des membrures 47 supporte en porte-à-faux une cornière 49.

Le déplacement transversal de la poutre 46 sur le chariot 16 est assuré par un vérin hydraulique à double effet 51, dont le corps est articulé en 52 sur un support 53 fixé à la membrure 22. L'extrémité de la tige 54 du vérin 51 est supportée par un galet fou 55 roulant librement sur la face supérieure de la membrure 22. La tige 54 supporte aussi un vérin hydraulique frein 57 dont les mâchoires enserrent l'aile libre de la cornière 49. Cette même aile de la cornière 49 est également prise entre les mâchoires d'un autre vérin hydraulique frein 58 directement fixé sur la membrure 22.

Ici encore l'alimentation hydraulique des deux entrées du vérin moteur 51, du vérin frein mobile 57 et du vérin frein fixe 58 est représentée schématiquement sur la figure 4, et est sous la dépendance d'un bloc distributeur 60. Selon le sens désiré du déplacement de la poutre 46, on provoque le serrage du vérin 57 et on rlâche le vérin d'immobilisation 58 en même temps qu'on alimente par l'entrée voulue le vérin 51; pendant la course retour, avec le vérin 57 relâché et le vérin 58 en position de serrage, aucun mouvement n'est alors transmis à la poutre 46.

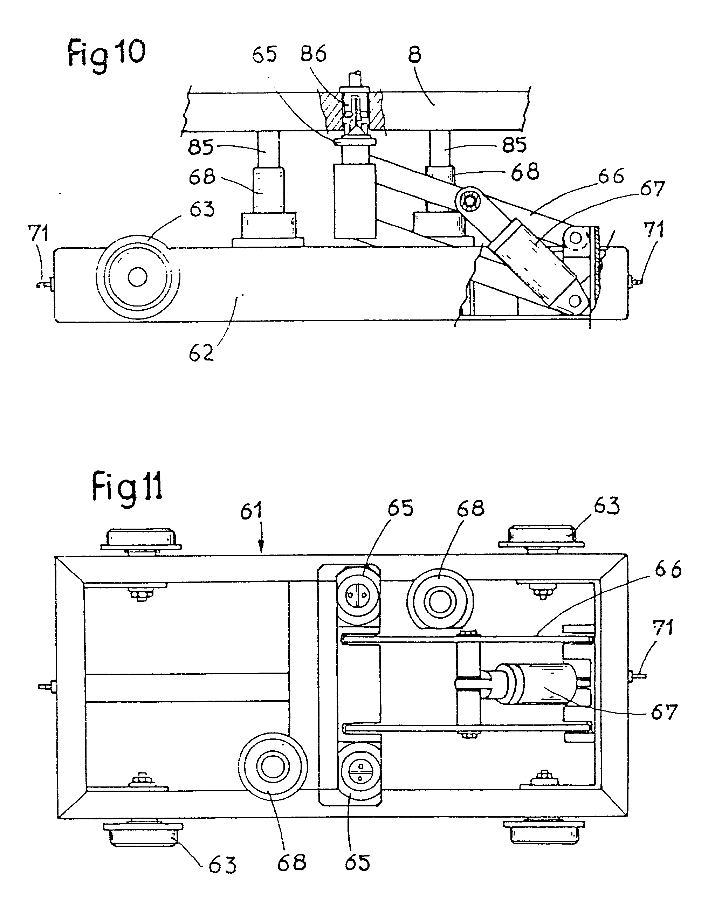

Le chariot porteur des appareils de contrôle proprement dits, désigné globalement par 61, est représenté plus en détail aux figures 10 et 11 comme s'il était isolé du reste de la machine. On le verra par contre aux figures 3 et 5 en position sur le reste de la machine support. Le chariot 61 est constitué par un châssis rectangulaire 62 muni de quatre galets porteurs fous 63. Les galets 63 sont engagés et emprisonnés dans les ailes intérieures des membrures 47 de la poutre 46.

Les appareils de contrôle qui sont ici représentés par des traducteurs à ultra-sons 65, sont montés par paire sur un système articulé à parallélogramme 66, déformable sous l'action du vérin 67. Le chariot 61 porte également deux vérins de centrage 68.

Le chariot 61 est mis en mouvement par rapport à la poutre 46 au moyen d'une chaîne 71 dont chaque extrémité est fixée à l'extrémité du châssis 62 du chariot. La chaîne ainsi bouclée passe sur deux roues de renvoi 72 portées respectivement par chacune des traverses 48 d'extrémité du chariot 46, comme on le voit sur la figure 9. En outre la chaîne 71 est solidarisée, par un élément du brin inférieur de la boucle, avec un point fixe 73 porté par une traverse du chariot 16.

Les câbles électriques d'alimentation des traducteurs à ultrasons arrivent sur le chariot longitudinal 16 jusqu'au centre d'une goulotte 80 reliant les deux entretoises d'extrémité 23 du châssis 16. La goulotte 80 sert de support à une boucle traînante 81 de câble dont l'extrémité mobile est fixée à un capteur 82 solidaire du chariot 61 et mobile avec lui.

Pour effectuer un contrôle de la face inférieure de la plaque 8 en position d'attente sur le stand 6-7, et en particulier pour contrôler l'état des broches élastiques qui y débouchent, on descend d'abord la machine réalisée selon l'invention sur ses rails 14 au-delà de la zone couverte par la bride 6, tous les câbles ou tuyauteries d'alimentation électrique et hydraulique étant déjà liés à la machine 10. Toutes les opérations ultérieures de contrôle seront alors réalisées en temps masqué par rapport aux autres opérations de chargement ou déchargement du cœur.

L'ensemble de la machine sera d'abord calé en position de référence en amenant le chariot sur des butées positionnées avec précision à l'extrémité des rails 14. Par une succession de cycles de commande du vérin 33, de blocage des galets 26, débrayage et retour du vérin, on amène le chariot 16 en position longitudinale désirée, les commandes cycliques pouvant facilement être automatisées par programmeur. De même par une succession de cycles de commande du vérin 51, blocage du frein 58, relâchement du vérin 57 et retour du vérin on amènera la poutre 46 et plus particulièrement le chariot porte-outils 61 en position transversale désirée, les commandes cycliques pouvant là encore facilement être automatisées par programmeur. On notera que dans le déplacement transversal le système à chaîne 71 joue le rôle de multiplicateur, puisque pour chaque course du vérin 51 le chariot 61 se déplace par rapport à la poutre 46 d'une même distance que le déplacement de la poutre 46 par rapport au chariot 61, c'est-à-dire qu'en définitive le déplacement transversal total du chariot 61 est le double de la course du vérin 51.

Lorsque le chariot 61 est amené en position convenable on alimente les vérins de centrage 68 qui viennent alors s'engager sur les broches de centrage 85 faisant saillie en-dessous de la plaque 8. Le positionnement étant alors assuré avec une grande précision, on peut amener, par manœuvre du vérin 67, les traducteurs à ultrasons 65 au contact des broches 86 à contrôler. Après vérification des deux broches élastiques d'un tube-guide le chariot porte-outils 61 peut être déplacé d'un pas dans une direction ou dans une autre pour procéder au même examen pour le tube guide suivant.

On observera que la machine ainsi réalisée constitue un ensemble particulièrement compact et de très faible hauteur totale, facile à amener sous la plaque 8, et permettant cependant de balayer la totalité de la surface inférieure de cette plaque. La figure 4 représente en simples silhouettes en traits mixtes deux positions excentrées du chariot porte-outils 61.

La faible hauteur totale de la machine résulte du fait que les déplacements du deuxième chariot 61 sur la poutre 46, et de la poutre 46 sur le premier chariot 16 s'effectuent dans le même plan matérialisé par les ailes inférieures des membrures en I 47, ce plan étant lui-même pratiquement dans le plan supérieur des rails 14 sur lesquels se déplace le premier chariot 16.

Bien entendu l'invention n'est pas strictement limitée au mode de réalisation qui a été décrit à titre d'exemple, mais elle couvre également les réalisations qui n'en différeraient que par des détails, par des variantes d'exécution, ou par l'utilisation de moyens équivalents. C'est ainsi que selon la nature des outils de contrôle que l'on veut disposer sur le chariot porte-outils, le dispositif support direct de ces outils pourrait être modifié, et même ne pas comporter de dispositif à parallélogramme si les outils peuvent travailler à une certaine distance de la plaque.

## Revendications

1. Machine pour le contrôle des équipements internes d'un réacteur nucléaire, lorsque ceux-ci sont stockés dans la piscine du réacteur, en utilisant des appareils de contrôle qui doivent être présentés en des emplacements prédéterminés selon un maillage régulier sous la plaque inférieure de l'ensemble des équipements, cette machine comportant:

– un premier chariot longitudinal (16), mobile sur des rails (14) reposant au fond de la piscine et disposés sous le support (6–7) de stockage des équipements internes, avec des moyens (26–32–33) de mise en déplacement par pas fixes et d'immobilisation sur les rails,
– une poutre transversale (46) portée par le premier chariot (16) et mobile sur celui-ci en direction perpendiculaire à celle du déplacement du chariot (16),
– un deuxième chariot transversal (61) équipé des appareils de contrôle (65) porté par la poutre (46) et mobile sur celle-ci dans la même direction que celle du déplacement de la poutre (46) sur le premier chariot (16),
– des moyens (51, 57, 58) de mise en déplacement par pas fixes de la poutre (46) sur le premier chariot (16),
– des moyens (71, 72, 73) pour engendrer un mouvement du deuxième chariot (61) sur la poutre (46) à partir du mouvement de la poutre (46) sur le premier chariot (16), caractérisée par le fait que les moyens pour engendrer le mouvement du deuxième chariot (61) sur la poutre (46) à partir du mouvement de la poutre (46) sur le premier chariot (16), comportent une chaîne (71) formant une boucle par fixation de chacune de ses extrémités sur chaque extrémité du deuxième chariot (61), après renvoi sur deux roues (72) solidaires des extrémités (48) de la poutre, le brin de la boucle opposé au deuxième chariot (61) étant rendu solidaire d'un point fixe (73) lié au châssis du premier chariot (16).

2. Machine selon revendication 1, caractérisée par le fait que le déplacement du premier chariot (16) sur ses rails (14) est assuré par pas fixes au moyen de galets moteurs (26) à roue dentée (29) conjuguée avec une crémaillère (15) liée aux rails (14), à partir de la course fixe d'un vérin hydraulique (33) entraînant les galets (26) par l'intermédiaire d'un système à pignon-crémaillère (32) et d'un embrayage (35) couplé avec un frein (39, 40) des galets.

3. Machine selon revendication 1, caractérisée par le fait que le déplacement de la poutre (46) sur le premier chariot (16) est assuré par pas fixes à partir de la course fixe d'un vérin hydraulique (51) porté par le chariot (16) et entraînant un élément (49) solidaire de la poutre (46) par l'intermédiaire d'une pince munie d'un système (57) de serrage et desserrage couplé à celui (58) d'une pince semblable d'immobilisation de la poutre (46) sur le chariot (16).

4. Machine selon revendication 1, caractérisée par le fait que les déplacements, du premier chariot (16) sur les rails (14), de la poutre transversale (46) sur le premier chariot (16) et du deuxième chariot (61) sur la poutre (46), sont tous les trois réalisés pratiquement dans le même plan horizontal.

## Patentansprüche

1. Maschine zur Kontrolle der Kernreaktoreinbauten bei deren Lagerung im Reaktorbecken unter Anwendung von Kontrollgeräten, die unter der unteren Platte der gesamten Einbauten gemäss einem regelmässigen Netzwerk an vorbestimmten Stellen zum Einsatz kommen müssen, wobei diese Maschine umfasst:
– ein erster längslaufender Wagen (16), der auf am Boden des Beckens aufliegenden, unter der Lagerungsabstützung (6–7) der Einbauten angeordneten Schienen (14) mit Mitteln (26–32–33) zu dessen Bewegung in festen Abständen und Feststellung auf den Schienen verfahrbar ist.
– ein auf dem ersten Wagen (16) abgestützter Querträger (46), der auf diesem senkrecht zur Bewegungsrichtung des Wagens (16) verfahrbar ist.
– ein zweiter mit den Kontrollgeräten (65) ausgerüsteter, auf dem Träger (46) abgestützter querlaufender Wagen (61), der auf diesem in derselben Richtung wie die Bewegungsrichtung des Trägers (46) auf dem ersten Wagen (16) verfahrbar ist,
– Mittel (51, 57, 58) zur Bewegung in festen Abständen des Trägers (46) auf dem ersten Wagen (16),
– Mittel (71, 72, 73) zur Erzeugung einer durch die Bewegung des Trägers (46) auf dem ersten Wagen (16) bewirkten Bewegung des zweiten Wagens (61) auf dem Träger (46), dadurch gekennzeichnet, dass die Mittel zur Erzeugung der durch die Bewegung des Trägers (46) auf dem ersten Wagen (16) bewirkten Bewegung des zweiten Wagens (61) auf dem Träger (46) eine Kette (71) umfassen, die nach deren Umlenkung über zwei mit den Enden (48) des Trägers festverbundenen Zahnrädern (72) durch Befestigung ihrer jeweiligen Enden an jedem Ende des zweiten Wagens (61) eine Schlaufe bildet, wobei das dem zweiten Wagen (61) entgegengesetzte Schlaufentrumm an einem Festpunkt (73) angeschlossen ist, der mit dem Rahmen des ersten Wagens (16) verbunden ist.

2. Maschine nach Anspruch 1, dadurch gekennzeichnet, dass die Bewegung des ersten Wagens (16) auf seinen Schienen (14) über Antriebsrollen (26) mit einem Zahnrad (29) in festen Abständen erfolgt, das einer an den Schienen (14) befestigten Zahnstange (15) zugeordnet ist, wobei diese Bewegung durch den gleichbleibenden Hub eines Hydraulikzylinders (33) bewirkt wird, der über ein Ritzel-Zahnstangensystem (32) und eine mit einer Bremse (39, 40) der Rollen gekoppelte Kupplung (35) die Rollen (26) antreibt.

3. Maschine nach Anspruch 1, dadurch gekennzeichnet, dass die Bewegung des Trägers (46) auf dem ersten Wagen (16) durch den gleichbleibenden Hub eines auf dem Wagen (16) abgestützten Hydraulikzylinders (51) in festen Abständen erfolgt, das ein mit dem Träger (46) festverbundenes Element (49) über eine Zange mit einem Spann- und Entspannsystem (57) antreibt, wobei dieses mit demjenigen (58) einer ähnlichen Zange zum Feststellen des Trägers (46) auf dem Wagen (16) gekoppelt ist.

4. Maschine nach Anspruch 1, dadurch gekennzeichnet, dass die Bewegungen des ersten Wagens (16) auf den Schienen (14), des Querträgers (46) auf dem ersten Wagen (16) und des zweiten Wagens (61) auf dem Träger (46) praktisch alle drei in derselben Horizontalebene erfolgen.

## Claims

1. Machine for the inspection of the internal equipment of a nuclear reactor, when this equipment is stored in the reactor pool, while employing inspection devices which must be offered at locations predetermined in accordance with a regular grid pattern under the lower plate of the equipment assembly, this machine comprising:
- a first longitudinal trolley (16), movable on rails (14) resting at the bottom of the pool and arranged under the storage support (6–7) for the internal equipment, with means (26–32–33) for setting in motion in fixed steps and for immobilisation on the rails,
- a transverse beam (46) carried by the first trolley (16) and movable on the latter in a direction perpendicular to that of the movement of the trolley (16),
- a second transverse trolley (61) equipped with inspection devices (65) carried by the beam (46) and movable on the latter in the same direction as that of the movement of the beam (46) on the first trolley (16),
- means (51, 57, 58) for setting the beam (46) in motion in fixed steps on the first trolley (16),
- means (71, 72, 73) for initiating a movement of the second trolley (61) on the beam (46) using the movement of the beam (46) on the first trolley (16), characterised in that the means of initiating the movement of the second trolley (61) on the beam (46) using the movement of the beam (46) on the first trolley (16), comprise a chain (71) forming a loop by each of its ends being fixed to each end of the second trolley (61), after being passed back over two wheels (72) fixed integrally to the ends (48) of the beam, the loop end opposite the second trolley (61) being integrally attached to a fixed point (73) joined to the chassis ·of the first trolley (16).

2. Machine according to Claim 1, characterised in that the movement of the first trolley (16) on its rails (14) is produced in fixed steps by means of driving rollers (26) with a toothed wheel (29) paired with a rack (15) joined to the rails (14), using the fixed travel of a hydraulic cylinder (33) driving the rollers (26) through the intermediary of a pinion-rack system (32) and a clutch (35) coupled with a brake (39, 40) for the rollers.

3. Machine according to Claim 1, characterised in that the movement of the beam (46) on the first trolley (16) is provided in fixed steps using the fixed travel of a hydraulic cylinder (51) carried by the trolley (16) and driving a member (49) fixed integrally to the beam (46) through the intermediary of a claw equipped with a system (57) for clamping and unclamping coupled to that (58) of a similar claw for immobilising the beam (46) on the trolley (16).

4. Machine according to Claim 1, characterised in that the movements of the first trolley (16) on the rails (14), of the transverse beam (46) on the first trolley (16), and of the second trolley (61) on the beam (46), are all three produced practically in the same horizontal plane.

Fig 1

Fig 2

Fig 3

Fig 4

# Fig 5

0 055 647

Fig 6

47
49
55
53 52 51 54 22 57

Fig 7

47
49
57
22

Fig 8

39 40
28 29 28
26
30
15
14
20
19 18 38

Fig 9

71
48
72

0 055 647

Fig 10

65  86  8

85  85
68  68  66  67
63
71  71

62

Fig 11

61  65  68  63

66

71

67

63  68  65